# EUROPÄISCHE PATENTSCHRIFT

(11) **EP 3 768 816 B1**
(45) Veröffentlichungstag und Bekanntmachung des Hinweises auf die Patenterteilung: **08.10.2025**
(21) Anmeldenummer: 19702481.3
(22) Anmeldetag: 08.02.2019
(51) Int. Cl.: B01F 25/53, B01F 25/312, C12H 1/14, C12L 11/00

(54) **VERFAHREN UND VORRICHTUNG ZUR KONSERVIERUNG VON WEINHALTIGEN FLÜSSIGKEITEN**
METHOD AND DEVICE FOR THE PRESERVATION OF LIQUIDS CONTAINING WINE
PROCÉDÉ ET DISPOSITIF DE CONSERVATION DE LIQUIDES À BASE DE VIN

(30) Priorität: 22.03.2018 EP 18163370
(43) Veröffentlichungstag der Anmeldung: 27.01.2021
(73) Patentinhaber: LANXESS Deutschland GmbH, 50569 Köln (DE)
(72) Erfinder: VOGL, Erasmus, 51429 Bergisch Gladbach (DE); TUTIC, Ermin, 59073 Hamm (DE)
(86) Internationale Anmeldenummer: PCT/EP2019/053126
(87) Internationale Veröffentlichungsnummer: WO 2019/179695

(56) Entgegenhaltungen:
- DE-A1- 10 122 918
- DE-A1- 102007 045 958
- DE-A1- 102008 048 714
- DE-B3- 102015 010 783
- DE-U1- 20 114 480
- DE-U1- 202006 006 757
- MD-F1- 591
- US-A1- 2011 206 540
- US-A1- 2013 019 972
- DATABASE EPODOC [online] EUROPEAN PATENT OFFICE, THE HAGUE, NL; 1995, "Method of production of sparkling wines", XP002784221, Database accession no. MD-950369-A

## Beschreibung

Die Erfindung betrifft ein Verfahren und eine Vorrichtung zur Konservierung von weinhaltigen Flüssigkeiten sowie die Verwendung der Vorrichtung zu diesem Zweck.

Konservierungsmittel, wie z.B. Dikohlensäurediester Schwefeldioxid, Natamycin, Benzoate oder Sorbate werden in der Getränkeindustrie zur Kaltentkeimung von alkoholfreien karbonisierten oder stillen Fruchtsaftgetränken, Fruchtsäften, Weinen, alkoholfreien Weinen, Ciders, Eis-Tees und anderen Getränken eingesetzt. Ein besonderes Kaltentkeimungsmittel stellen die Dikohlensäurediester, wie insbesondere Dimethyldicarbonat oder Diethyldicarbonat, dar, die eine Reihe von Vorteilen aufweisen. Der herausragende Vorteil liegt dabei in der Tatsache begründet, dass Geschmack und Farbe, im Gegensatz zur Heißabfüllung, nicht beeinflusst werden. Auch gegenüber persistenten Konservierungsstoffen, wie Natriumbenzoat bzw. Benzoesäure oder Kaliumsorbat bzw. Sorbinsäure, besteht der Vorteil insbesondere in der Abwesenheit jeglicher geschmacklicher Beeinträchtigungen und dem Verschwinden der Wirkung. Auf Grund des Zerfalls der Dikohlensäurediester in unbedenkliche Bestandteile wird durch den eigentlichen Verbraucher kein Konservierungsstoff konsumiert.

Gegenüber einer kaltaseptischen Abfüllung sind besonders die ganz wesentlich geringeren Investitionskosten in Anlagentechnik als Vorteil beim Einsatz von Dikohlensäurediestern bekannt.

US-A-2013/019972 beschreibt ein Zirkulationsdispersionssystem zur Erzeugung von Fest / Flüssig und Flüssig / Flüssig Dispersionen / Emulsionen, welches zwei Behälter umfasst, die mit einem Ventil verbunden sind und eine Mischungsvorrichtung, die die Vermischung gewährleistet. Die Zufuhr der Flüssigkeiten zu der Mischungsvorrichtung wird durch die Kontrolle des Füllstandes in den beiden Behältern geregelt.

US-A-2011/206540 beschreibt Dosiersysteme, die für die Dosierung von Suspensionen und Emulsionen geeignet sein sollen. Durch die Lehre der US-A-2011/206540 soll das Absetzen von pharmazeutischen Wirkstoffen, die bei Emulsionen und Dispersionen gebildet werden, in der Anlage reduziert werden, um die Qualität der pharmazeutischen Produkte zu verbessern. Weder die Mischung mit Wein ist ein Thema, noch dessen Konservierung, weder mit noch ohne Dikohlensäurediestern.

DE-A-10122918 beschreibt ein Transmittiergerät um Wein an Magneten vorbei zuleiten um dadurch sein Aroma zu verbessern.

DE-B-102015/010783 betrifft einen Getränkezubereiter, sowie eine mit einem solchen Getränkezubereiter ausgestattete Schankanlage und ein Steuerverfahren zur Gasdosierung für einen solchen Getränkezubereiter.

European Patent Office, The Hague, NL; 1995, "Method of production of sparkling waters",; & MD 591 F1 (Blagodetelev Vladislav [MD]; Grosul lurii [MD]) 31. Juli 1996 betrifft die Zuführung von Kohlendioxid zu Perlwein.

DE-U-202006006757 betrifft eine Vorrichtung, die zur Aufrechterhaltung eines maximalen Füllstands von in einem Barriquefass oder in einem anderen Holzfass enthaltenem Wein verwendet werden kann, um u.a. den Verdunstungsverlust zu verringern.

Die DE-A-102007045958 beschreibt ein Verfahren zur Herstellung von mikrobiell stabilisierten Getränken bei dem man Dialkyldicarbonat in Form einer wässrigen und/oder organischen Lösung dem Getränk zugibt und hierbei ein Mischungsaggregat verwendet.

Aus der DE-A-102008048714 ist ein Verfahren bekannt, bei dem ein Getränk mit A) Limonen oder Limonen-haltigen Formulierungen versetzt wird und B) nachfolgend mit einem Dialkyldicarbonat.

Nach dem Stand der Technik werden zur Zugabe von Dikohlensäurediester ausschließlich on-line Dosierpumpen verwendet. Diese bestehen aus einem temperaturkontrolliertem Edelstahlkabinett, einer magnetisch angetriebenen Membranpumpe, Vorrats- und Puffergefässen, einer an die Getränkeleitung angebrachten Vorrichtung zur Verdüsung mit Mischrohr, einem an die Getränkeleitung angebrachten Durchflussmessgerät, sowie einer Elektronik-Steuerung und Speicherung. Dosierpumpen dieser Art sind üblicherweise fest in die Getränkelinie installiert.

Die Funktionsweise dieser Geräte beruht auf der online Messung der im Getränkerohr herrschenden Getränkedurchflussrate und der daraus parallel berechneten Menge an Dikohlensäurediester. Der Dikohlensäurediester wird damit jeweils genau in der benötigten Menge in das Getränkerohr zudosiert.

Bei der Behandlung von weinhaltigen Flüssigkeiten, insbesondere von Wein oder Weimischgetränken, insbesondere bei der Behandlung von Wein in Fässern während der Reifung, kann eine kaltsterile Behandlung mit Dikohlensäurediestern beispielsweise zur Bekämpfung von Brettanomyces Hefen des Weines nötig werden. Bei der Behandlung wird in der Regel ein zweiter Behälter eingesetzt, welcher mindestens den gleichen Inhalt, wie der erste Behälter aufweist, um die umgepumpte Menge an Flüssigkeit aufzunehmen. Zur Dosage des Kaltentkeimungsmittels werden üblicherweise auch in diesem Verfahren on-line Dosierpumpen eingesetzt. Da die on-line Dosierpumpen An- und Ablaufzeiten besitzen, wird häufig eine Unter- oder Überfüllung des zweiten Behälters, teilweise unter Verlust des Getränkes beobachtet. Außerdem sind die on-line Dosierpumpen relativ teuer. Ein Aufbau erfordert spezielle Transportvorrichtungen und der Anschluss erfordert ausreichend Zeit.

Es bestand daher weiterhin Bedarf nach einem Verfahren mit dem die Nachteile des Standes der Technik zur Konservierung von weinhaltigen Flüssigkeiten, insbesondere von Wein oder Weinmischgetränken, überwunden werden können.

Überraschend wurde nun ein Verfahren gefunden, das auch ohne die on-line Dosierpumpensysteme betrieben werden kann und bei dem der Verlust an weinhaltigen Flüssigkeiten, bei der Behandlung der weinhaltigen Flüssigkeiten mit Konservierungsmitteln, reduziert werden kann und gleichzeitig eine hohe Durchmischung erzielt wird. Das Verfahren ist zudem ökonomischer als die bisher eingesetzten Verfahren zur Konservierung weinhaltiger Flüssigkeiten.

Gegenstand der Erfindung ist daher ein Verfahren zur Konservierung einer weinhaltigen Flüssigkeit, bestehend aus einem Behälter, mindestens einer Leitung, durch die die weinhaltige Flüssigkeit aus dem Behälter mittels einer Pumpe gepumpt wird und mindestens einem Vorratsbehälter, der als Konservierungsmittel Dikohlensäurediester enthält, bei dem das Konservierungsmittel der weinhaltigen Flüssigkeit in der Leitung zugeführt wird und diese Mischung in denselben Behälter gepumpt wird und bei dem die Injektion aus dem Vorratsbehälter in die Leitung gegebenenfalls mittels eines Injektors erfolgt.

Weinhaltige Flüssigkeit im Sinne der Erfindung sind vorzugsweise Wein und Weinmischgetränke, die zusätzlich bis zu 90 Gew. % Wasser, bezogen auf die Gesamtmasse der weinhaltigen Flüssigkeit, enthalten können. Bei der weinhaltigen Flüssigkeit handelt es sich besonders bevorzugt um Wein und Weinmischgetränke. Der Wein und die Weimischgetränke können alkoholisch oder entalkoholisiert sein. Wein im Sinne der Erfindung ist ein alkoholisches oder entalkoholisiertes Getränk, das aus dem vergorenen Saft von Weintrauben gewonnen wurde. Bevorzugt enthält der Wein im Sinne der Erfindung 7 Gew.% bis 18 Gew.% Ethanol bezogen auf die Gesamtmasse des Weins.

Weinmischgetränke sind vorzugsweise Mischungen aus Weisswein, Rotwein, Rosewein und Fruchtsaft oder/und Aromenkomponenten. Weimischgetränke enthalten vorzugsweise 1 Gew. % bis 50 Gew. % Wein und 99 Gew. % bis 50 Gew. % Fruchtsäfte bezogen auf die Gesamtmasse der Weimischgetränke, besonders bevorzugt enthalten Weinmischgetränke 5 Gew. % bis 30 Gew. % Wein und 95 Gew. % bis 70 Gew. % Fruchtsäfte bezogen auf die Gesamtmasse der Weimischgetränke.

Der Behälter ist bevorzugt ein Fass oder ein Tank. Der Behälter besteht bevorzugt aus Metall oder Holz. Besonders bevorzugt besteht der Behälter aus Holz. In einer bevorzugten Ausführungsform der Erfindung weist der Behälter eine Höhe von 85 bis 100 cm und einen Durchmesser von 65 bis 75 cm bezogen auf die Mitte des Fasses auf. Besonders bevorzugt hat der Behälter eine Höhe von 90 cm bis 100 cm und einen Durchmesser von 60 cm bis 70 cm bezogen auf die Mitte des Fasses.

In einer weiteren bevorzugten Ausführungsform der Erfindung hat der Behälter ein Volumen von 100 I bis 2000 I, besonders bevorzugt von 200 I bis 500 I und ganz besonders bevorzugt von 200 I bis 300 I.

Die Leitungen können Metallrohre oder Gummi- oder Kunststoffschläuche sein. Bevorzugt sind für die Leitungen teils Metallrohre am Ein und Auslass teils Kunststoffschläuche für die Verbindungsbereiche. Besonders bevorzugt werden als Leitungen Metallrohre verwendet. Bevorzugt bestehen die Metallrohre aus Edelstahl. Bevorzugt haben die Leitungen einen Durchmesser von 2 cm bis 7 cm. Beide Leitungsöffnungen, die des Zuflusses in den Behälter hinein, und die des Abflusses, aus dem Behälter heraus, reichen bevorzugt in die weinhaltige Flüssigkeit im Behälter. Der Behälter kann auch nur teilweise mit der weinhaltigen Flüssigkeit gefüllt sein. Die Position des Zuflusses kann durch Positionierung der Leitung angepasst, damit die Leitung in die weinhaltige Flüssigkeit reicht. Die Position des Abflusses kann ebenfalls durch Positionierung der Leitung angepasst werden. Die Positionen des Zuflusses und des Abflusses der Leitungen in dem Behälter haben bevorzugt einen Abstand von mindestens 5 cm bezogen auf den Abstand der Mittelpunkte der Öffnungen der Leitungen, besonders bevorzugt von mindestens 10 cm bis 20 cm bezogen auf den Abstand der Mittelpunkte der Öffnungen der Leitungen.

Als Pumpe im Sinne der Erfindung ist grundsätzlich jede Art von Flüssigkeitspumpe geeignet, wie beispielweise Zentrifugal-, Getriebe-, Membran-, Helix-, Flüssigjet-, Verdränger-, Schrauben- oder Kolbenpumpen. Bevorzugt im Sinne der Erfindung wird eine selbstansaugende Pumpe verwendet. Dies sind Pumpen, welche bei Anlaufen nicht bereits mit dem flüssigen zu pumpenden Medium gefüllt sein müssen, leer anlaufen können und durch ihre Fähigkeit auch in trockenem Zustand eine Saugwirkung entwickeln und selbständig das Medium ansaugen.

In bevorzugter Ausführung besteht die Pumpe aus einer Lebensmittel-konformen elektrisch betriebenen Pumpe für Flüssigkeiten. Bevorzugt hat die Pumpe eine Leistung von 10 I/min bis 50 I/min. Besonders bevorzugt hat die Pumpe eine Leistung >50 I/min. Die Pumpe wird üblicherweise mit dem Ein- und Auslauf über geeignete elastische Schläuche mit den Leitungen verbunden. In einer weiteren erfindungsgemäßen Ausführungsform wird eine Tauchpumpe verwendet. Die Tauchpumpe wird vorzugsweise am Zufluss oder am Ablauf der Leitungen installiert.

Der Vorratsbehälter dient zur Lagerung und als Vorlage der Konservierungsmittel. Das Konservierungsmittel wird bevorzugt über eine Kapillare aus dem Vorratsbehälter in die Leitung hineingesaugt. Hierzu dient bevorzugt ein Injektor, der in dem Vorratsbehälter integriert ist. Vorzugsweise wird eine Venturi-Düse als Injektor verwendet. Alternativ kann der Injektor auch aus einem flexibel angebrachten Gewinde bestehen, in welches das Gefäß mit dem Konservierungsmittel eingeschraubt wird und dann manuell durch drehen oder umkehren auf den Kopf gestellt werden kann, um damit das Einfließen des Konservierungsmittels, insbesondere der Dikohlensäurediester, herbeizuführen.

Es ist bevorzugt, dass die Pumpe in Bezug auf die Fließrichtung der weinhaltigen Flüssigkeit in der Leitung hinter dem Vorratsbehälter positioniert wird. Bevorzugt ist dann der Abstand zwischen Vorratsbehälter und Pumpe nicht größer als 50 cm. Dadurch wird zudem die Durchmischung der weinhaltigen Flüssigkeit und des Konservierungsmittels in der Leitung unterstützt.

Die Konservierung erfolgt gegen Mikroorganismen, wie z.B. Bakterien und Pilzen. Bevorzugt erfolgt die Konservierung gegen Pilze. Der Begriff Konservierung im Rahmen der Erfindung umfasst ebenfalls die Sterilisation, also den Fall, bei dem schon vor dem Zusatz der Konservierungsmittel Mikroorganismen in den weinhaltigen Flüssigkeiten enthalten sind. Die Konservierungsmittel wirken dann ebenfalls als Sterilisationsmittel.

Als Konservierungsmittel werden Dikohlensäurediester, wie besonders bevorzugt Dimethyldicarbonat und Diethyldicarbonat eingesetzt. Ganz besonders bevorzugt wird Dimethyldicarbonat, als Konservierungsmittel eingesetzt.

Vorzugsweise werden 0,1 ppm bis 250 ppm Konservierungsmittel bezogen auf das Volumen der weinhaltigen Flüssigkeit eingesetzt. Besonders bevorzugt werden 1 ppm bis 250 ppm Konservierungsmittel bezogen auf das Volumen der weinhaltigen Flüssigkeit eingesetzt.

Besonders bevorzugt werden 1 bis 250 ppm Dikohlensäurediester als Konservierungsmittel bezogen auf das Volumen der weinhaltigen Flüssigkeit eingesetzt.

In einer weiteren Ausführungsform der Erfindung wird vorzugsweise zwischen 16 ml und 40 ml an Dikohlensäurediester für ein Volumen weinhaltiger Getränke zwischen 200 I und 500 I eingesetzt wird.

In einer weiteren Ausführungsform der Erfindung wird besonders bevorzugt 8 ml bis 80 ml Dikohlensäurediester für 100 I bis 2000 I weinhaltige Flüssigkeit eingesetzt.

Bevorzugt wird das erfindungsgemäße Verfahren in der Art durchgeführt, dass die weinhaltige Flüssigkeit aus dem Behälter in die Leitung gepumpt wird. Die Leitungsöffnung für den Abfluss und die Leitungsöffnung für den Zufluss weisen bevorzugt mindestens 5 cm Abstand auf, damit eine verbesserte Vermischung erfolgen kann. Dann fließt die weinhaltige Flüssigkeit vorzugsweise an dem Vorratsbehälter, vorzugsweise mit Injektor, vorbei. Vorzugsweise wird dabei der weinhaltigen Flüssigkeit, dass Konservierungsmittel zugeführt. Das Konservierungsmittel kann diskontinuierlich, also batchweise, oder kontinuierlich zugesetzt werden. Bevorzugt erfolgt die Zugabe kontinuierlich. Vorzugsweise erfolgt die Vermischung durch die Verwendung einer Venturi-Düse in der Leitung. Danach erfolgt vorzugsweise eine weitere Vermischung in der Pumpe, vorzugsweise durch turbulente Verwirbelung. Der weinhaltigen Flüssigkeit könnten auch weitere Additive, wie z.B. Süßstoffe, zugeführt werden. Diese Additive werden vorzugsweise in zusätzlichen Vorratsbehältern gelagert. Zudem können weitere Zuleitungen für den Anschluss der Pumpe oder der Vorratsbehälter angeschlossen werden. Die weinhaltige Flüssigkeit, die mit den Konservierungsmitteln versetzt wurde, wird dann wieder in denselben Behälter zurückgeführt.

Die weinhaltige Flüssigkeit wird vorzugsweise mindestens einmal vollständig umgepumpt. Bevorzugt wird die weinhaltige Flüssigkeit mindestens fünfmal vollständig umgepumpt. Mit dem Ausdruck "Umpumpen" im Sinne der Erfindung ist gemeint, dass der Inhalt des Behälters vollständig ausgetauscht wird. Vorzugsweise wird das Konservierungsmittel während des ersten Umpumpvorganges vollständig zugegeben. Vorzugsweise erfolgt während der weiteren Umpumpvorgänge keine weitere Zugabe von Konservierungsmitteln.

Bevorzugt erfolgt der Pumpvorgang für einen Zeitraum von 5 min bis 20 min. Besonders bevorzugt für einen Zeitraum von 10 min bis 15 min.

Von der Erfindung ist auch eine Vorrichtung zur Durchführung der erfindungsgemäßen Verfahrens umfasst, bestehend aus einem Behälter, mindestens einer Leitung, eine Pumpe und mindestens einem Vorratsbehälter, der als Konservierungsmittel Dikohlensäurediester enthält, bei dem das Konservierungsmittel der weinhaltigen Flüssigkeit in der Leitung zugeführt wird und diese Mischung in denselben Behälter gepumpt wird und bei dem die Injektion aus dem Vorratsbehälter in die Leitung gegebenenfalls mittels eines Injektors erfolgt.

Von der Erfindung ist ebenfalls die Verwendung der erfindungsgemäßen Vorrichtung zur Konservierung von weinhaltigen Flüssigkeiten, insbesondere von Wein und Weinmischgetränken, umfasst.

Im Folgenden wird die Erfindung ohne Beschränkung des allgemeinen Erfindungsgedankens unter Bezugnahme auf die Figur näher erläutert.

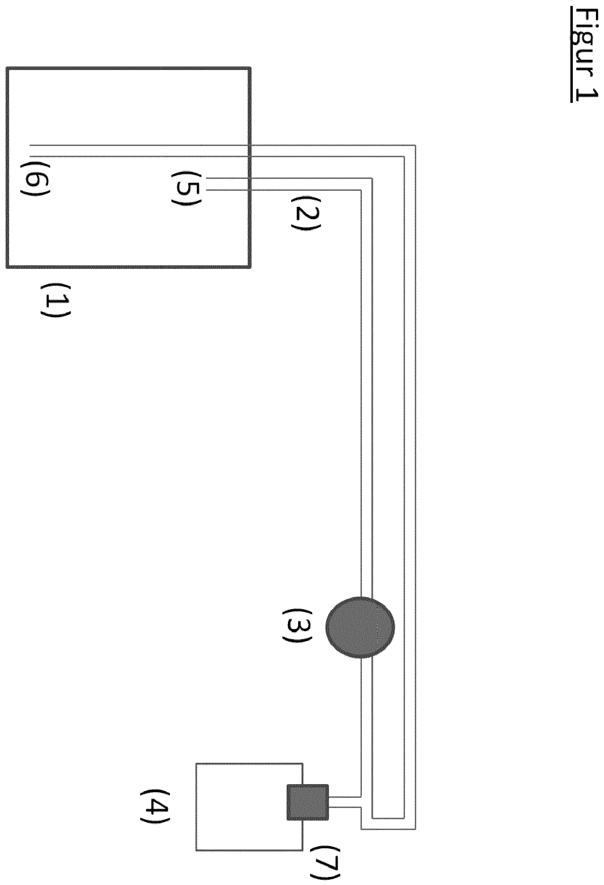

Figur 1 zeigt einen allgemeinen Aufbau der erfindungsgemäßen Vorrichtung.

Figur 1 zeigt dabei die erfindungsgemäße Vorrichtung zur Konservierung einer weinhaltigen Flüssigkeit, bestehend aus einem Behälter (1), mindestens einer Leitung (2), eine Pumpe (3) und mindestens einem Vorratsbehälter (4), der als Konservierungsmittel Dikohlensäurediester enthält, bei dem das Konservierungsmittel der weinhaltigen Flüssigkeit in der Leitung (2) zugeführt wird und diese Mischung in denselben Behälter (1) gepumpt wird und bei dem die Injektion aus dem Vorratsbehälter (4) in die Leitung (2) gegebenenfalls mittels eines Injektors (7) erfolgt.

Bevorzugt erfolgt die Zugabe des Konservierungsmittels mittels eine Injektors (7) aus dem Vorratsbehälter (4). Bevorzugt erfolgt die Injektion über eine Venturi-Düse durch den durch die Pumpe erzeugten Unterdruck in der Leitung (2). In diesem Fall erfolgt durch diese Düse ebenfalls eine Vermischung von weinhaltiger Flüssigkeit und Konservierungsmittel.

Figur 1 zeigt auch das Verfahren zur Konservierung einer weinhaltigen Flüssigkeit, bestehend aus einem Behälter (1), mindestens einer Leitung (2), eine Pumpe (3) und mindestens einem Vorratsbehälter (4), der als Konservierungsmittel Dikohlensäurediester enthält, bei dem das Konservierungsmittel der weinhaltigen Flüssigkeit in der Leitung (2) zugeführt wird und diese Mischung in denselben Behälter (1) gepumpt wird und bei dem die Injektion aus dem Vorratsbehälter (4) in die Leitung (2) gegebenenfalls mittels eines Injektors (7) erfolgt.

In einer weiteren bevorzugten Ausführungsform der Erfindung, wird das Verfahren in der Art durchgeführt, dass die Leitungsöffnung des Zuflusses (5), aus dem die Mischung aus Konservierungsmittel und weinhaltiger Flüssigkeit in den Behälter zurückfließt und die Leitungsöffnung des Abflusses (6), sich beide in der weinhaltigen Flüssigkeit befindet.

In einer weiteren bevorzugten Ausführungsform der Erfindung, wird das Verfahren in der Art durchgeführt, dass die Leitungsöffnung des Zuflusses (5), aus dem die Mischung aus Konservierungsmittel und weinhaltiger Flüssigkeit in den Behälter zurückfließt und die Leitungsöffnung des Abflusses (6), die sich beide in der weinhaltigen Flüssigkeit befinden, einen Abstand von mindestens 5 cm haben, bezogen auf den Abstand der Mittelpunkte der Öffnungen der Leitungen.

Mit der erfindungsgemäßen Vorrichtung wird eine effiziente Behandlung von weinhaltigen Flüssigkeiten in Behältern, insbesondere mit einem hohen Volumen, wie z.B. in Tanks oder Fässern, gegen die Verunreinigung durch Mikroorganismen möglich. Auf technisch aufwendig Systeme kann verzichtet werden, und damit das Konservierungsverfahren ökonomischer betrieben werden. Zudem kann der üblicherweise beim Umfüllen der weinhaltigen Flüssigkeit in einen zweiten Behälter auftretenden Verlust an weinhaltigen Getränken reduziert werden. Damit wird die Ausbeute an zu behandelnden weinhaltigen Flüssigkeiten während der Konservierung erhöht. Durch die erfindungsgemäße Vorrichtung und das erfindungsgemäße Verfahren kann zudem eine zumindest gleichwertige Durchmischung mit den Konservierungsmitteln erzielt werden.

### Beispiele

### Beispiel 1

Die Vorrichtung gemäß Figur 1 wurde eingesetzt. Als Pumpe wurde eine ALM-40 der Firma Tellarini, Ravenna IT verwendet. Die Pumpe wurde mit flexiblen Schläuchen an die Ein- und Auslässe der Leitungen angeschlossen. Vor der Pumpe wurde ein T-Stück in den Schlauch eingebunden, welches ein Einsaugen des Dimethyldicarbonates ermöglichte.

Das Rohr wurde in das Spundloch eines Barrique Fasses eingeführt und mit einer Elastomeren Dichtung der Raum zwischen Rohr und Spundloch verschlossen. Der Abstand zwischen der Leitungsöffnung des Zuflusses, aus dem die Mischung aus Konservierungsmittel und weinhaltiger Flüssigkeit in den Behälter zurückfließt und die Leitungsöffnung des Abflusses, die sich beide in der weinhaltigen Flüssigkeit befinden, beträgt 15 cm. Mit der beschriebenen Vorrichtung wurden 225 Liter Wein eines Barrique Fasses (Volumen 225 I) 10 min umgepumpt. Wein: Winzerei Alde Gott, 2014 Spätburgunder, Qunalitätswein Rot & Süss, Baden, mit 10,0% Alkohol. Während des Pumpvorganges wurde die angegebene Menge Dimethyldicarbonat (DMDC) zugegeben. Daraufhin wurden jeweils 3 Proben des Weines entnommen (50 ml) und nach 10 h Hydrolysezeit die zusätzliche Menge an MeOH gegen eine Blindprobe abgeglichen. Der Methanolgehalt der Weines vor Dosage war 107 ppm MeOH.

Aus 100 ppm DMDC bilden sich nach Hydrolyse 48 ppm MeOH.

**Tabelle 1**

| Dosage an DMDC | berechnete Menge MeOH | gemessene Menge MeOH | | |
|---|---|---|---|---|
| Dichte (DMDC): 1,25 g/ml | | Probe 1 | Probe 2 | Probe 3 |
| 18 ml (100 ppm) | 48 ppm | 46 ppm | 49 ppm | 47 ppm |
| 36 ml (200 ppm) | 96 ppm | 95 ppm | 95 ppm | 94 ppm |

Die Ergebnisse bestätigen eine gleichmäßige Einbringung und Durchmischung der weinhaltigen Flüssigkeiten mit Dimethyldicarbonat.

## Patentansprüche

1. Verfahren zur Konservierung einer weinhaltigen Flüssigkeit, bestehend aus einem Behälter (1), mindestens einer Leitung (2), durch die die weinhaltige Flüssigkeit aus dem Behälter (1) mittels einer Pumpe (3) gepumpt wird und mindestens einem Vorratsbehälter (4), der als Konservierungsmittel Dikohlensäurediester enthält, **dadurch gekennzeichnet, dass** das Konservierungsmittel der weinhaltigen Flüssigkeit in der Leitung (2) zugeführt wird und diese Mischung in denselben Behälter (1) gepumpt wird und dass die Injektion aus dem Vorratsbehälter (4) in die Leitung (2) gegebenenfalls mittels eines Injektors (7) erfolgt.

2. Verfahren gemäß Anspruch 1, **dadurch gekennzeichnet, dass** das Volumen des Behälters 100 I bis 2000 I beträgt.

3. Verfahren gemäß Anspruch 2, **dadurch gekennzeichnet, dass** das Volumen des Behälters 200 I bis 300 I beträgt.

4. Verfahren gemäß mindestens einem der Ansprüche 1 bis 3, **dadurch gekennzeichnet, dass** die Leitungsöffnung des Zuflusses (5), aus dem die Mischung aus Konservierungsmittel und weinhaltiger Flüssigkeit in den Behälter zurückfließt und die Leitungsöffnung des Abflusses (6), sich beide in der weinhaltigen Flüssigkeit befinden.

5. Verfahren gemäß mindestens einem der Ansprüche 1 bis 4, **dadurch gekennzeichnet, dass** die Leitungsöffnung des Zuflusses (5), aus dem die Mischung aus Konservierungsmittel und weinhaltiger Flüssigkeit in den Behälter zurückfließt und die Leitungsöffnung des Abflusses (6), die sich beide in der weinhaltigen Flüssigkeit befinden, einen Abstand von mindestens 5 cm haben, bezogen auf den Abstand der Mittelpunkte der Öffnungen der Leitungen.

6. Verfahren gemäß mindestens einem der Ansprüche 1 bis 5, **dadurch gekennzeichnet, dass** das Konservierungsmittel Dimethyldicarbonat oder Diethyldicarbonat ist.

7. Verfahren gemäß mindestens einem der Ansprüche 1 bis 6, **dadurch gekennzeichnet, dass** 1 ppm bis 250 ppm des Konservierungsmittels bezogen auf das Volumen der weinhaltigen Flüssigkeit zugesetzt wird.

8. Verfahren gemäß mindestens einem der Ansprüche 1 bis 7, **dadurch gekennzeichnet, dass** die Pumpe eine Pumpleistung von 10 l/min bis 50 l/min hat.

9. Verfahren gemäß mindestens einem der Ansprüche 1 bis 8, **dadurch gekennzeichnet, dass** der Pumpvorgang für einen Zeitraum von 10 min bis 15 min durchgeführt wird.

10. Verfahren gemäß mindestens einem der Ansprüche 1 bis 9, **dadurch gekennzeichnet, dass** die Flüssigkeit des Behälters mindestens einmal vollständig umgepumpt wird.

11. Vorrichtung zur Konservierung einer weinhaltigen Flüssigkeit, bestehend aus einem Behälter (1), mindestens einer Leitung (2), eine Pumpe (3) und mindestens einem Vorratsbehälter (4), der als Konservierungsmittel Dikohlensäurediester enthält, **dadurch gekennzeichnet, dass** das Konservierungsmittel der weinhaltigen Flüssigkeit in der Leitung (2) zugeführt wird und diese Mischung in denselben Behälter (1) gepumpt wird und dass die Injektion aus dem Vorratsbehälter (4) in die Leitung (2) gegebenenfalls mittels eines Injektors (7) erfolgt.

12. Verfahren gemäß Anspruch 11, **dadurch gekennzeichnet, dass** der Injektor (7) eine Venturi-Düse ist.

13. Verwendung der Vorrichtung gemäß mindestens einem der Anspruch 11 bis 12 zur Konservierung von Wein und Weinmischgetränken.

## Claims

1. Method for preserving a wine-containing liquid, consisting of a vessel (1), at least one line (2) by means of which the wine-containing liquid is pumped from the vessel (1) using a pump (3), and at least one storage vessel (4) comprising dicarbonate diester as preservative, **characterized in that** the preservative is supplied to the wine-containing liquid in the line (2) and this mixture is pumped into the same vessel (1), and **in that** the injection is carried out from the storage vessel (4) into the line (2), optionally by means of an injector (7).

2. Method according to Claim 1, **characterized in that** the volume of the vessel is 100 1 to 2000 l.

3. Method according to Claim 2, **characterized in that** the volume of the vessel is 200 1 to 300 1.

4. Method according to at least one of Claims 1 to 3, **characterized in that** the line opening of the inlet (5) from which the mixture of preservative and wine-containing liquid flows back into the vessel, and the line opening of the outlet (6) are both within the wine-containing liquid.

5. Method according to at least one of Claims 1 to 4, **characterized in that** the line opening of the inlet (5) from which the mixture of preservative and wine-containing liquid flows back into the vessel, and the line opening of the outlet (6), both of which are within the wine-containing liquid, are at a distance of at least 5 cm from each other, based on the distance between the centres of the openings of the lines.

6. Method according to at least one of Claims 1 to 5, **characterized in that** the preservative is dimethyl dicarbonate or diethyl dicarbonate.

7. Method according to at least one of Claims 1 to 6, **characterized in that** 1 ppm to 250 ppm of the preservative is added based on the volume of the wine-containing liquid.

8. Method according to at least one of Claims 1 to 7, **characterized in that** the pump has a pumping capacity of 10 l/min to 50 l/min.

9. Method according to at least one of Claims 1 to 8, **characterized in that** the pumping process is carried out for a period of 10 min to 15 min.

10. Method according to at least one of Claims 1 to 9, **characterized in that** the liquid of the vessel is completely recirculated by the pump at least once.

11. Device for preserving a wine-containing liquid, consisting of a vessel (1), at least one line (2), a pump (3) and at least one storage vessel (4) comprising dicarbonate diester as preservative, **characterized in that** the preservative is supplied to the wine-containing liquid in the line (2) and this mixture is pumped into the same vessel (1), and **in that** the injection is carried out from the storage vessel (4) into the line (2), optionally by means of an injector (7).

12. Device according to Claim 11, **characterized in that** the injector (7) is a Venturi nozzle.

13. Use of the device according to at least one of Claims 11 and 12 for preserving wine and wine cocktails.

## Revendications

1. Procédé de conservation d'un liquide contenant du vin, constitué d'un récipient (1), d'au moins un conduite (2) à travers laquelle le liquide contenant du vin est pompé à partir du récipient (1) au moyen d'une pompe (3) et d'au moins un réservoir (4) contenant en tant que conservateur un diester d'acide carbonique, **caractérisé en ce que** le conservateur est ajouté au liquide contenant du vin dans la conduite (2) et ce mélange est pompé dans le même récipient (1) et **en ce que** l'injection depuis le réservoir (4) dans la conduite (2) est éventuellement effectuée au moyen d'un injecteur (7).

2. Procédé selon la revendication 1, **caractérisé en ce que** le volume du récipient est de 100 1 à 2 000 1.

3. Procédé selon la revendication 2, **caractérisé en ce que** le volume du récipient est de 200 1 à 300 1.

4. Procédé selon au moins l'une quelconque des revendications 1 à 3, **caractérisé en ce que** l'ouverture de conduite de l'alimentation (5), à partir de laquelle le mélange de conservateur et de liquide contenant du vin retourne dans le récipient, et l'ouverture de conduite de l'évacuation (6), se trouvent toutes deux dans le liquide contenant du vin.

5. Procédé selon au moins l'une quelconque des revendications 1 à 4, **caractérisé en ce que** l'ouverture de conduite de l'alimentation (5), à partir de laquelle le mélange de conservateur et de liquide contenant du vin retourne dans le récipient, et l'ouverture de conduite de l'évacuation (6), qui se trouvent toutes deux dans le liquide contenant du vin, ont une distance d'au moins 5 cm, par rapport à la distance des centres des ouvertures des conduites.

6. Procédé selon au moins l'une quelconque des revendications 1 à 5, **caractérisé en ce que** le conservateur est le dicarbonate de diméthyle ou le dicarbonate de diéthyle.

7. Procédé selon au moins l'une quelconque des revendications 1 à 6, **caractérisé en ce que** de 1 ppm à 250 ppm du conservateur sont ajoutés par rapport au volume du liquide contenant du vin.

8. Procédé selon au moins l'une quelconque des revendications 1 à 7, **caractérisé en ce que** la pompe a une puissance de pompage de 10 l/min à 50 l/min.

9. Procédé selon au moins l'une quelconque des revendications 1 à 8, **caractérisé en ce que** l'opération de pompage est effectuée pendant une durée de 10 minutes à 15 minutes.

10. Procédé selon au moins l'une quelconque des revendications 1 à 9, **caractérisé en ce que** le liquide du récipient est entièrement pompé au moins une fois.

11. Dispositif de conservation d'un liquide contenant du vin, constitué d'un récipient (1), d'au moins un conduite (2), d'une pompe (3) et d'au moins un réservoir (4) contenant en tant que conservateur un diester d'acide carbonique, **caractérisé en ce que** le conservateur est ajouté au liquide contenant du vin dans la conduite (2) et ce mélange est pompé dans le même récipient (1) et **en ce que** l'injection depuis le réservoir (4) dans la conduite (2) est éventuellement effectuée au moyen d'un injecteur (7).

12. Procédé selon la revendication 11, **caractérisé en ce que** l'injecteur (7) est une buse venturi.

13. Utilisation de dispositif selon au moins l'une quelconque des revendications 11 à 12 pour la conservation de vin et de boissons à base de vin.
